# EUROPÄISCHE PATENTANMELDUNG

(11) **EP 3 400 766 A1**
(43) Veröffentlichungstag der Anmeldung: **14.11.2018**
(21) Anmeldenummer: 18169158.5
(22) Anmeldetag: 25.04.2018
(51) Int. Cl.: A01B 63/112, A01B 63/114

(54) **VERFAHREN UND VORRICHTUNG ZUR BESTIMMUNG EINER NEIGUNG EINES KIPPBAREN ANBAUGERÄTES EINES FAHRZEUGS**

(30) Priorität: 12.05.2017 DE 102017208055
(71) Anmelder: Robert Bosch GmbH, 70442 Stuttgart (DE)
(72) Erfinder: Michalke, Gabriele, 71263 Weil Der Stadt (DE); Gonzalez Fernandez, Mario, 70825 Korntal-Muenchingen (DE)
(74) Vertreter: Thürer, Andreas

(57) **Zusammenfassung**

Es werden Verfahren und Vorrichtungen zur Bestimmung und ggf. Anpassung einer Neigung (1) eines an einem Fahrzeug (2) befindlichen oder mittels eines Hubwerkes (3) kippbaren Anbaugerätes (4) vorgeschlagen. Hierbei werden zumindest die folgenden Schritte umgesetzt:
a) Erfassen mindestens eines Markers (5) an zumindest dem Hubwerk (3) oder dem Anbaugerät (4),
b) Erstellen eines Abbildes (6) des mindestens einen Markers (5) mit einer Kamera (7),
c) Ermitteln zumindest eines Marker-Formparameters oder Marker-Lageparameters aus dem Abbild (6),
d) Bestimmen der Neigung (1) des Anbaugerätes (4) mittels eines Abgleiches des Ergebnisses aus Schritt c) mit zumindest einem vorgebbaren realen Marker-Formparameter oder Marker-Lageparameter des Markers (5).

## Beschreibung

Die vorliegende Erfindung betrifft ein Verfahren und verschiedene Vorrichtungen, mit denen die Neigung eines an einem Fahrzeug befindlichen oder mittels eines Hubwerks kippbaren Anbaugeräts bestimmt und ggf. angepasst werden kann. Bei dem Fahrzeug handelt es sich insbesondere um einen Traktor mit einer hydraulischen Betätigungseinheit zur Regelung des Betriebs des Anbaugeräts an dem Fahrzeug. Die Erfindung findet insbesondere Anwendung bei einem Traktor mit einem landwirtschaftlichen Ackerschlepper, einer mobilen Arbeitsmaschine zur Feldbearbeitung oder dergleichen. Traktoren beziehungsweise Ackerschlepper als universell einsatzbare Arbeitsmaschinen werden vorrangig in der Landwirtschaft zur Bearbeitung von Ackerböden eingesetzt.

Das Pflügen stellt einen wichtigen Arbeitsgang in der landwirtschaftlichen Bodenbearbeitung dar. Ziel dabei ist, ein möglichst gleichmäßiges Pflugbild zu erreichen. Ziel ist insbesondere eine einheitliche Breite und Tiefe der Furche zu erzeugen, die von den einzelnen Pflugscharen hinterlassen werden und zwar unabhängig von etwaigen Änderungen in der Bodentopologie.

Das Pflügen stellt auch hohe Anforderungen an den Antriebsstrang des Traktors und die Regelgüte einer elektronisch-hydraulischen Hubwerksregelung, denn nur mit einem abgestimmten Betrieb können die Pflugarbeiten schnell und effizient durchgeführt werden. Vor allem bei stark inhomogenen und sehr feuchten Böden besteht aufgrund einer sehr großen Widerstandskraft am Pflug die Möglichkeit, dass der Traktor steckenbleibt und/oder der Motor abgewürgt wird.

Es sind bereits Maßnahmen ergriffen worden, um die Zugkraft und/oder die Lage des Pflugs während der Bodenbearbeitung einzustellen. Bei sehr welligen und unebenen Böden kann die Pflugtiefe auch über die variierende Zugkraft dem Bodenprofil angepasst werden, wenn die Lage beziehungsweise Tiefe des Pflugs geregelt werden.

Durch das hydraulisch betriebene Hubwerk am Traktor kann über Hydraulikzylinder am Oberlenker und/oder Unterlenker die Höhe (Lage, Position) und Verkippung (Winkel) des Anbaugeräts, z. B. eines Pflugs, eingestellt werden. Die Höhe sowie Verkippung wird nicht direkt messtechnisch ermittelt sondern lediglich durch einen Sollwert vom Bediener vorgegeben, der die Höhe des Anbaugeräts ggf. selbst visuell prüft. Die Höhe des Anbaugeräts kann ggf. auch durch einen Weggeber im Hubwerk bestimmt werden, eine solche sensorische Ermittlung ist jedoch nicht bei jedem Traktor vorhanden beziehungsweise möglich.

Ein verkipptes Pflug-Anbaugerät hat ein ungleichmäßiges Pflugbild zur Folge, weil dann die äußeren Pflugscharen weniger tief oder zu tief eintauchen. Andererseits kann eine gezielte Verkippung bei Bodenwollen und Bodensenken nutzbringend für ein gleichmäßigeres Pflugbild eingesetzt werden und verhindern, dass sich der Pflug zu tief eingräbt und damit eine ungleichmäßige Zugkraft am Traktor bewirkt.

Hiervon ausgehend ist es Aufgabe der vorliegenden Erfindung, Verfahren und Vorrichtungen anzugeben, die die genannten Nachteile lindern oder sogar vermeiden. Insbesondere soll eine automatische Regelung der Neigung des Anbaugeräts ermöglicht werden beziehungsweise eine Unterstützung des Bedieners des Fahrzeugs erreicht werden, so dass die rein visuelle Prüfung beziehungsweise Einstellung unterstützt oder vermieden werden kann.

Diese Aufgaben werden gelöst mit einem Verfahren gemäß den Schritten des Patentanspruchs 1 sowie einem Bildverarbeitungsapparat gemäß dem Patentanspruch 8. Weitere Ausgestaltungen der Erfindung sind in den abhängigen Patentansprüchen angegeben. Es ist darauf hinzuweisen, dass die Beschreibung, insbesondere im Zusammenhang mit den Figuren, weitere Einzelheiten und Weiterbildungen der Erfindung anführen, die mit den Merkmalen aus den Patentansprüchen kombinierbar sind.

Hierzu trägt ein Verfahren zur Bestimmung einer Neigung eines an einem Fahrzeug befindlichen oder mittels eines Hubwerks kippbaren Anbaugeräts bei, welches zumindest die folgenden Schritte umfasst:
a) Erfassen mindestens eines Markers an zumindest einem Hubwerk an dem Anbaugerät,
b) Erstellen eines Abbilds des mindestens einen Markers mit einer Kamera,
c) Ermitteln zumindest eines Marker-Formparameters oder Marker-Lageparameters aus dem Abbild,
d) Bestimmen der Neigung des Anbaugeräts mittels eines Abgleichs des Ergebnisses aus Schritt c) mit zumindest einem vorgebbaren realen Marker-Formparameter oder Marker-Lageparameter des Markers.

Die hier aufgeführte Reihenfolge der Schritte a) bis d) kann in dem Verfahren eingehalten werden, es ist jedoch auch möglich, dass sich zumindest einige der Schritte wenigstens teilweise überlagern, zeitgleich ablaufen und/oder in einer abgewandelten Reihenfolge ausgeführt werden. Es ist möglich, dass die Schritte einzeln oder in (beliebiger) Kombination miteinander wiederholt durchgeführt werden.

Bei dem Fahrzeug kann es sich insbesondere um einen Traktor handeln. Das Anbaugerät bzw. das Hubwerk kann im Front- und/oder Heckbereich des Fahrzeugs angebracht sein. Das Anbaugerät, insbesondere ein Pflug, kann entweder frei kippen und/oder mittels eines Hubwerks kippbar am Fahrzeug befestigt sein.

In Schritt a) wird zunächst ein Marker an dem Hubwerk oder dem Anbaugerät erfasst bzw. erkannt. Hierfür kann z.B. eine Kamera so eingerichtet sein bzw. werden, dass mindestens ein Marker im deren Aufnahmebereich positioniert ist. Der Marker (ggf. auch als optische Markierung oder dergleichen zu bezeichnen) stellt insbesondere ein am Anbaugerät und/oder Hubwerk vorgesehenes (separates) Element bzw. Bauteil dar, welches speziell (auch) für die hier vorliegende Bestimmung der Neigung vorgesehen ist. Ein Marker hat insbesondere eine visuell leicht erfassbare beziehungsweise per Kamera einfach detektierbare Form, Farbe und/oder Position. Grundsätzlich können mehrere Marker mit einem (definierten) Abstand zueinander am Hubwerk und/oder dem Anbaugerät vorgesehen sein.

Gemäß Schritt b) wird (mindestens oder genau) ein Abbild des einen Markes und/oder mehrerer bzw. aller Marker mit einer Kamera erstellt. So kann beispielsweise in Schritt a) die Kamera auf ein bestimmtes Sichtfeld ausgerichtet werden und in Schritt b) von dem bestimmtes Sichtfeld ein Abbild erstellt werden. Es ist möglich, dass mehrere Marker auf einem Abbild aufgenommen sind.

Gemäß Schritt c) wird dann zumindest ein Marker-Formparameter oder Marker-Lagerparameter aus dem Abbild ermittelt. Dies heißt mit anderen Worten insbesondere, dass anhand einer Bildanalyse vorgebbare Parameter der Form und/oder der Lage eines einzelnen und/oder mehrerer Marker (zueinander) erfasst werden. Insbesondere werden hier aus dem Abbild zunächst die Marker selbst identifiziert und dann ggf. deren Durchmesser, Größen, Formen, Abmessungen, Muster, Rahmen, etc. ermittelt. "Formparameter" betreffen dabei insbesondere Eigenschaften des Markers, die die Form des Markers (z. B. äußere Gestalt, innerer Aufbau, Muster) betreffen. "Lageparameter" sind insbesondere Angaben, die eine Relativlage des Markers zu einem vorgebbaren Bezugspunkt (Entfernung, Verschwenkung, Verkippung, Rotation, etc.) betreffen.

Die Neigung des Anbaugeräts wird nun gemäß Schritt d) mittels eines Abgleichs des Ergebnisses bzw. der Ergebnisse aus Schritt c) mit einem oder mehreren vorgebbaren Marker-Formparametern und/oder Marker-Lageparametern des realen Markers bestimmt. Mit anderen Worten bedeutet das insbesondere, dass die aus dem Abbild ermittelten Marker-Formparameter und/oder Marker-Lageparameter mit den realen Formparametern beziehungsweise Lageparametern des Markers verglichen werden. Hieraus können insbesondere Rückschlüsse über die Entfernung zur Kamera, die Verdrehung zur Kamera, eine Neigung zur Kamera, etc. ermittelt werden. Aus den Unterschieden der aufgenommenen Parameter im Abbild und den realen Parametern des Markers kann insofern die Neigung bestimmt werden.

Der tatsächliche Marker sowie insbesondere dessen tatsächliche Marker-Formparameter und/oder Marker-Lageparameter sind vorab (ggf. in Bezug auf eine Referenzlage des Anbaugerätes/Hubwerkes zum Fahrzeug) definiert. Bei der Auswahl eines Markers ist insofern zu beachten, dass dieser Eigenschaften aufweist, die aus dem Abbild der Kamera extrahierbar sind. Dies erlaubt, dass zunächst der Marker erkannt, daraus seine Position (Entfernung, Translation, Rotation) ermittelt und folglich die Position des Anbaugerätes bzw. Hubwerks bestimmt werden kann.

Mit anderen Worten betrifft die Erfindung insbesondere einen kamerabasierten Ansatz zur Bestimmung der Pflugverkippung. Auch die Verkippung anderer Anbaugeräte kann auf die gleiche Art und Weise bestimmt werden. Dabei kann eine Kamera am Heck oder Bug des Fahrzeugs (Traktors) auf das Anbaugerät (Pflug) ausgerichtet sein und das Kamerabild online - also während des Betriebs des Fahrzeugs - mit Hilfe von Bildverarbeitungsalgorithmen ausgewertet und darüber der Verkippungswinkel berechnet werden.

Gemäß einer bevorzugten Ausgestaltung sind mindestens zwei kugelförmige Marker mit einem Kugeldurchmesser vorgesehen. Für den Abgleich werden dabei als Marker-Formparameter der Kugeldurchmesser und als Marker-Lageparameter eine Relativlage der zumindest zwei kugelförmigen Marker zueinander berücksichtigt. Insofern können die beiden kugelförmigen Marker mit dem jeweils bekannten (realen) Kugeldurchmesser an unterschiedlichen Stellen des Anbaugeräts und/oder des Hubwerks positioniert sein. Insbesondere können die beiden kugelförmigen Marker am Pflug angebracht werden, so dass sie im Kamerabild leicht erkannt und ohne Verzerrung im Abbild dargestellt werden können. Nach Bestimmung der Kugeldurchmesser im Abbild und in Kenntnis des bekannten (realen) Kugeldurchmessers kann die Entfernung und damit die Position in der Welt beziehungsweise Umgebung bestimmt werden. Aus dieser Position heraus kann der relative Winkel (Verkippung) zum Traktor berechnet werden, wenn die Kamera entsprechend kalibriert ist.

Die kugelförmigen Marker haben den Vorteil, dass das Abbild davon immer kreisförmig ist, egal aus welchem Winkel die Kamera das Abbild aufnimmt. Werden weiße Kugeln verwendet, ergibt sich ein guter Kontrast zur Umgebung. Die Größe des Kreises der Kugel im Abbild gibt direkt Auskunft über die Entfernung des kugelförmigen Markers von der Kamera, weil der reale Kugeldurchmesser bekannt ist. Die reale Verschiebung des Mittelpunkts der kugelförmigen Marker zueinander (Höhe h) ergibt mit dem bekannten Abstand der kugelförmigen Marker zueinander direkt den Verkippungswinkel.

Im Einzelnen können folgende Teilprozesse zur Ermittlung der Höhe h ausgeführt werden:
a. Generieren eines Grauwertbilds.
b. Auffinden von Kreisen oder Ellipsen, beispielsweise mit einer Hough-Transformation.
c. Berechnen des Mittelpunkts des Kreises oder der Ellipse im Abbild.
d. Erstellen eines mathematischen Strahls von der Kamera zum kugelförmigen Marker mit dem bekannten Mittelpunkt in der intrinsischen Kalibrierung der Kamera.
e. Nutzung der bekannten Größen der kugelförmigen Marker (Kugeldurchmesser), um über die intrinsischen Parameter auf die Entfernung der kugelförmigen Marker zu schließen.
f. Mit dem Strahl und der berechneten Entfernung kann die 3D-Position des kugelförmigen Markers im Kamerakoordinatensystem abgeleitet werden.
g. Die 3D-Position lässt sich mit einer extrinsischen Kalibrierung auf einen Bezugspunkt am Fahrzeug beziehungsweise Traktor beziehen und somit in das Weltkoordinatensystem umrechnen.
h. Werden zwei kugelförmige Marker am Pflug eingesetzt, kann über die ermittelten Höhen (h) die Differenz dieser Höhen und dem bekannten Abstand (a) der relative Winkel am Traktor bestimmt werden.

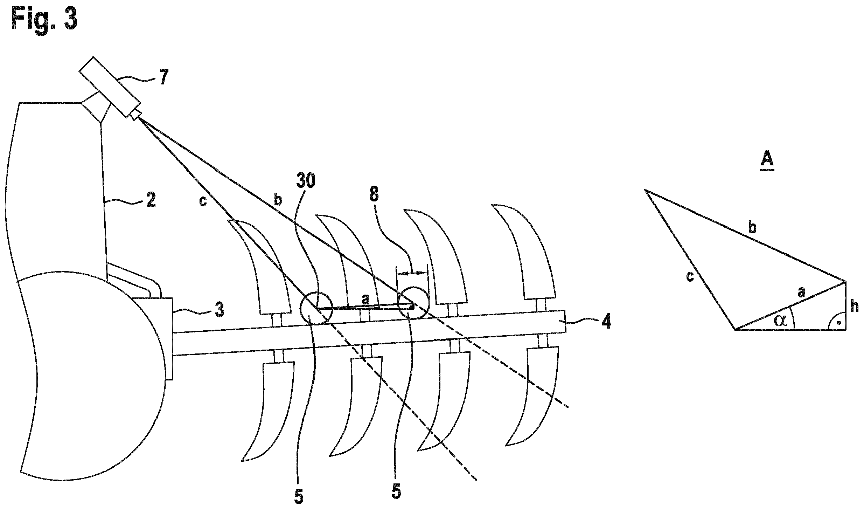

Dies wird auch nachfolgend anhand der Fig. 3 näher erläutert.

Es kann vorgesehen sein, dass mindestens ein eckiger Marker mit einer Rahmenkontur vorgegebener Größe bereitgestellt ist und für den Abgleich als Marker-Formparameter die Größe der Rahmenkontur und als Marker-Lageparameter eine Rotation der Rahmenkontur berücksichtigt wird.

Ein "eckiger" Marker kann beispielsweise eine äußere quadratische beziehungsweise rechteckige Form aufweisen. Der eckige Marker kann mit einem Muster ausgeführt sein, das auch im innen liegenden Bereich mehrere eckige scharfkantige Übergänge der Form, insbesondere des Kontrasts, bereitstellt. Die Rahmenkontur betrifft hierbei insbesondere die inneren und/oder äußeren Grenzen voneinander kontrastreich abgegrenzter Bereiche des Markers. Die "Größe" der Rahmenkontur kann anhand der Dimensionen, des Flächeninhalts und/oder der räumlichen Verteilung von kontrastreichen Bereichen bei dem Marker definiert werden. Es ist möglich, mehrere eckige Marker am Anbaugerät und/oder dem Hubwerk vorzusehen.

Insbesondere werden am Anbaugerät beziehungsweise Pflug mehrere rechteckige Marker mit vordefinierten Mustern angebracht. Mit einer kalibrierten Kamera lässt sich über die perspektivische Verzerrung der Marker im Abbild auf deren Position und Rotation zu einem Bezugspunkt schließen. Um eine höhere Genauigkeit dieser Methode zu gewährleisten, können mehrere Marker mit unterschiedlichem Muster verwendet werden, zwischen denen im Bildverarbeitungsalgorithmus differenziert werden kann.

Ein eckiger Marker kann ein kontrastreiches Muster ähnlich eines Schachbrettmuster aufweisen. Vorteil ist hierbei, dass solche Muster auch als Aufkleber am Anbaugerät bzw. Hubwerk angebracht werden können und die Befestigung einfacher ist als mit den kugelförmigen Markern. Zusätzlich können diese eckigen Marker einfacher im Abbild detektiert werden, insbesondere wenn diese eine einmalige Mustergestaltung (ID) aufweisen. Nachfolgend wird das Verfahren unter Einsatz eckiger Marker an einem Beispiel erläutert.

Zuerst kann ein Abbild der Kamera in interessante und weniger interessante Bereiche segmentiert und durch eine Kantenerkennung und/oder durch eine Erstellung eines binären Bilds anhand von einem vorgegebenen Grenzwert unterteilt werden. Hierdurch werden die Marker mit hohem Kontrast deutlich hervorgehoben. Dann können Konturen im Abbild gefunden werden, die sich z.B. mit exakt vier Linien beschreiben lassen können (z. B. die äußere Rahmenkontur eines Markers). Darauf folgt eine Überprüfung der Konturen über die mögliche Übereinstimmung des Ausschnitts im Abbild mit der bekannten, einmaligen Mustergestaltung (ID) des eckigen Markers. Zu diesem Zweck kann der Ausschnitt perspektivisch in eine frontale Sicht korrigiert werden. Stimmt die Mustergestaltung (ID) mit der gesuchten überein, werden die Eckpunkte der Kontur mit höherer Genauigkeit detektiert, z.B. so genannte Subpixel-Genauigkeit. Mittels der bekannten Größe der Rahmenkontur und dem Viereck im Abbild kann auf die Rotation und Translation der Kamera geschlossen werden, die nötig ist, um die Bewegung von der Kamera zum eckigen Marker zu beschreiben. Diese Berechnung ist allgemein als Perspective-M-Point Problematik bekannt. Mit der berechneten Rotation und Translation ist die Lage des Markers im Koordinatensystem bekannt. Mit einer intrinsisch kalibrierten Kamera sind diese Werte auf das reale metrische System bezogen. Anschließend kann mit einer extrinsisch kalibrierten Kamera von der Rotation und Translation im Koordinatensystem der Kamera auf die Werte im Weltkoordinatensystem geschlossen werden. Wird der Ursprung des Weltkoordinatensystems innerhalb des Fahrzeugs beziehungsweise des Traktors gelegt, ist die Lage des Markers und schließlich auch des Pflugs gegenüber des Ursprungs im Fahrzeug bekannt. Vorteil dieser Methode ist, dass alle sechs Freiheitsgrade berechnet werden können.

Wird einer der vorgesehenen Marker kurzzeitig nicht detektiert, kann ein Kalman-Filter zur Prädiktion der Rotation und Translation der Markierung genutzt werden. Damit Dreck oder sonstige Störungen auf den Markern und/oder der Kamera nicht für eine Fehlerkennung sorgen, können die Marker mit einer Fehlerdetektion und Fehlerkorrektur der jeweiligen Mustergestaltung (ID) versehen werden, wie beispielsweise Hamming-Code. Um die Genauigkeit zu erhöhen und Fehlerkennung weiter zu reduzieren, können mehrere redundante Marker mit unterschiedlicher Mustergestaltung (ID) verwendet werden. Aus den berechneten Werten lässt sich dann eine kombinierte Lösung für die Lage des Pflugs berechnen. Ein zusätzlicher Vorteil der eindeutigen Codierung der Marker ist, dass Anbaugeräte unterschieden werden, indem unterschiedliche aber bekannte IDs verwendet werden. Hierdurch können andere Parameter für beispielsweise die Regelung des Betriebs verwendet werden.

Es ist möglich, dass der mindestens eine Marker eine vorgegebene Komponente des Anbaugeräts (ggf. alternativ oder kumulativ des Hubwerks) mit einer 3-dimenionalen Form ist und für den Abgleich als Marker-Formparameter eine Verzerrung der 3-dimenionale Form der Komponente berücksichtigt wird. In diesem Fall nutzt das Verfahren als Marker eine von der Kamera zu detektierende Komponente des Anbaugeräts, wobei deren 3-dimensionale Form für einen Abgleich bekannt ist, so dass die aufgenommene Form beziehungsweise das Abbild dieser Komponente mit der bekannten 3-dimensionalen realen Form abgeglichen werden kann. Die Komponente hat insoweit einen anderen Primärzweck beim Hubwerk und/oder Anbaugerät und dient z. B. der Betätigung des Anbaugeräts, der Bodenbearbeitung und/oder der Halterung von Bauteilen. Mit anderen Worten bedeutet dies, dass keine zusätzlichen (separaten) Marker am Anbaugerät beziehungsweise Pflug angebracht sein müssen, sondern der Bildverarbeitungsalgorithmus durch erkannte Merkmale einer Komponente des Anbaugeräts im Abbild selbst und dessen bekanntem 3D-Modell als Referenz über die Verzerrung der Korrespondenzen auf die Rotation und schließlich auf die Verkippung schließen kann.

In diesem Fall kann über einen entsprechenden Bildverarbeitungsalgorithmus über das Auffinden markanter Merkmale die vorgegebene Komponente ermittelt werden. Über den Zusammenhang der gefundenen Merkmale der Kontur im Bild und denen aus einem bekannten 3D-Modell oder einem Referenzbild der realen Komponente wird die Geometrie des Anbaugeräts und dessen Rotation geschlossen. Hier dient somit die Form des Pflugs beispielsweise selbst als Referenz. Diese Methode ist bildverarbeitungstechnisch komplex und ggf. etwas ungenauer. Vorteil dieser Methode ist jedoch die Robustheit gegenüber Überdeckungen.

Weiter wird ein Verfahren zum Betrieb eines Fahrzeugs mit zumindest einer hydraulischen Betätigungseinheit, einem Hubwerk, einer Steuerung, einer Kamera und einem kippbaren Anbaugerät vorgeschlagen, wobei das hier erläuterte Verfahren genutzt wird, die Neigung des Anbaugeräts zu bestimmen und die Neigung auf einen vorgebbaren Sollwert automatisch nachgeregelt wird. Der Sollwert kann beispielsweise vom Bediener manuell und/oder von einer Steuerung automatisch vorgegeben werden. Ebenfalls erfolgt hier während des Betriebs des Fahrzeugs ein Abgleich zwischen dem Sollwert der Neigung und des kippbaren Anbaugeräts mit dem bestimmten Wert der Neigung, so dass kontinuierlich oder in diskreten Zeitabständen nachgeregelt wird.

Weiter wird eine elektronische Schaltungsanordnung zur Neigungsbestimmung oder Neigungsanpassung eines kippbaren Anbaugeräts vorgeschlagen, die in einem Fahrzeug angeordnet ist. Die elektronische Schaltungsanordnung ist vorgesehen und eingerichtet zur Durchführung des hier vorgeschlagenen Verfahrens zur Bestimmung einer Neigung eines an einem Fahrzeug befindlichen oder mittels eines Hubwerks kippbaren Anbaugeräts.

Zudem wird eine Vorrichtung an einem Fahrzeug mit zumindest einer hydraulischen Betätigungseinheit, einem Hubwerk, einer Steuerung, einer Kamera und einem kippbaren Anbaugerät sowie der vorstehend genannten elektronischen Schaltungsanordnung vorgeschlagen.

Gemäß einem weiteren Aspekt wird ein Bildverarbeitungsapparat vorgeschlagen, zumindest umfassend:
- eine Kamera
- einen Datenspeicher für Abbilder,
- eine Erkennungseinrichtung für mindestens einen Marker an einem Hubwerk oder einem Anbaugerät an einem Fahrzeug auf einem Abbild der Kamera,
- eine Erfassungseinrichtung für zumindest einen Marker-Formparameter oder einen Marker-Lageparameter des Markers aus dem Abbild der Kamera,
- eine Bewertungseinrichtung für zumindest einen Marker-Formparameter oder einen Marker-Lageparameter des Markers aus dem Abbild der Kamera in Bezug auf einen realen Marker-Formparameter oder einen Marker-Lageparameter des Markers zur Bereitstellung einer Lageinformation,
- eine Ausgabeeinrichtung für die Lageinformation.

Hinsichtlich des Verfahrens zum Betrieb eines Fahrzeugs, der elektronischen Schaltungsanordnung, der Vorrichtung an einem Fahrzeug und/oder des Bildverarbeitungsapparats sei auf die vorstehenden Erläuterung zum hier vorgeschlagenen Verfahren zur Bestimmung einer Neigung eines an einem Fahrzeug befindlichen oder mittels eines Hubwerks kippbaren Anbaugeräts verwiesen. Die dortigen Erläuterungen können auch zur Charakterisierung dieser Aspekte der Erfindung herangezogen werden und vice versa. Für die hier vorgeschlagenen Vorrichtungen wird insbesondere eine Kamera mit Blickrichtung auf das Anbaugerät beziehungsweise Hubwerk eingesetzt. Die Marker am Anbaugerät und/oder dem Hubwerk sollten im (stationären) Sichtfeld der Kamera gut erfassbar sein. Das Fahrzeug sollte eine Steuerung beziehungsweise einen Bildverarbeitungsapparat mit ausreichend großer Speicher- bzw. Rechenkapazität aufweisen, um online die Bildverarbeitung durchführen zu können. Ist das Fahrzeug beziehungsweise der Traktor mit einer elektrischen Hubwerksregelung ausgestattet, kann der Bediener beziehungsweise das Fahrzeug die rechnerisch bestimmte Verkippung ausgleichen beziehungsweise dies geschieht automatisiert über die elektrische Hubwerksregelung, die die Verkippung auf Null regelt oder an die Bodengeometrie anpasst.

Die hier vorgeschlagene Assistenzfunktion unterstütz die Effizienz der Arbeiten in der Landwirtschaft. Auch die Zeitersparnis und Verbesserung des Prozessergebnisses sind erheblich, wenn der Bediener des Fahrzeugs ein solches Assistenzsystem nutzt. Die Erfindung kann bei nahezu allen Traktoren mit elektrischer Hubwerksregelung eingesetzt beziehungsweise nachgerüstet werden, wobei die ermittelte Neigung dann für die Regelung als Eingangssignal dienen kann.

Die Erfindung sowie das technische Umfeld werden nachfolgend anhand der Figuren näher erläutert. Es ist darauf hinzuweisen, dass die in den Figuren einzeln dargestellten Merkmale in beliebiger Kombination auch mit Merkmalen aus anderen Figuren und/oder der Beschreibung kombinierbar sind. Etwas anderes soll nur gelten, wenn hier die Kombination explizit ausgewiesen wird. Es zeigen schematisch:
Fig. 1: ein Fahrzeug, eingerichtet zur Durchführung des hier vorgeschlagenen Verfahrens,
Fig. 2: einen Bildverarbeitungsapparat,
Fig. 3: eine Darstellung zur Veranschaulichung der Bildverarbeitung anhand kugelförmiger Marker,
Fig. 4: eine schematische Darstellung zur Veranschaulichung der Berechnungsmethode bei eckigen Marken,
Fig. 5: eine Veranschaulichung einer Berechnung der Verkippung auf Basis der Kontur des Anbaugeräts.

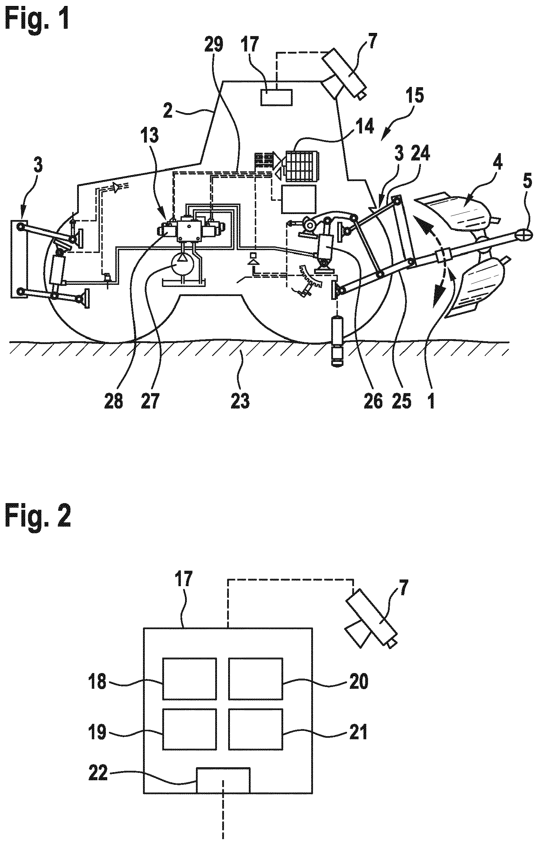

Fig. 1 zeigt die prinzipielle Darstellung der hier vorgeschlagenen Schaltungsanordnung 15 an einem Fahrzeug 2, insbesondere nach Art eines Traktors bei der Bodenbearbeitung und einem Anbaugerät 4, insbesondere mit einem Pflug. Dabei zieht das Fahrzeug 2 bei einer Fahrt das Anbaugerät 4 hinter sich her und durch eine Oberschicht des Bodens 23. Der allgemeine Fahrbetrieb des Fahrzeugs 2 kann über eine (ggf. separate) Fahrzeugsteuerung beeinflusst werden. Die Lage bzw. Position des Anbaugerät 4 kann mit einer hydraulischen Betätigungseinheit 13, aufweisend eine Steuerung 14 samt datenleitenden Verbindungen 29 zur Ansteuerung der hydraulischen Betätigungseinheit 13 und (mindestens) ein Hubwerk 3, eingestellt werden. Die hydraulische Betätigungseinheit 13 kann insbesondere wie folgt aufgebaut sein: Die Pumpe 27 fördert einen Ölstrom zum Regelventil 281, welches einen Unterlenkerzylinder 26 steuert. Dieser wirkt auf die Unterlenker 25, wodurch das Anbaugerät 4 (ggf. im Zusammenspiel mit einem Oberlenker 24) gehoben, gehalten oder abgesenkt werden kann.

Weiter ist eine Kamera 7 einem Bildverarbeitungsapparat 17 vorgesehen, die an bzw. auf dem Fahrzeug 2 angebracht ist. Die Kamera 7 ist auf das Anbaugerät 4 gerichtet und kann insbesondere einzelne oder alle am Hubwerk 3 und/oder Anbaugerät 4 vorgesehenen Marker 5 fokussiert erfassen. Die Kamera 7 kann z. B. eine für optische Messungen geeignete Rückwärts- bzw. Rückfahrkamera oder eine speziell für den hier beschriebenen Anwendungszweck verbaute Digitalkamera (hochauflösend) sein. Die Kamera 7 und der Bildverarbeitungsapparat 17 sind ebenfalls mittels datenleitender Verbindungen mit der Steuerung verbunden.

Fig. 2 veranschaulicht schematisch einen Aufbau eines mit einer Kamera 7 zusammenwirkenden Bildverarbeitungsapparats 17. Dieser umfasst einen Datenspeicher18 für Abbilder, eine Erkennungseinrichtung19 für mindestens einen Markerauf einem (zwischengespeicherten) Abbild, eine Erfassungseinrichtung 20für zumindest einen Marker-Formparameter oder einen Marker-Lageparameter des Markers aus dem Abbild, eine Bewertungseinrichtung21 für zumindest einen Marker-Formparameter oder einen Marker-Lageparameter des Markers aus dem Abbild in Bezug auf einen realen Marker-Formparameter oder einen Marker-Lageparameter des Markers zur Bereitstellung einer Lageinformation und eine Ausgabeeinrichtung22 für die Lageinformation. Auch wenn diese Einrichtungen hier separat ausgewiesen sind, können diese doch zumindest teilweise auch in einer gemeinsamen Recheneinheit und/oder Steuerung integriert sein. Es ist möglich, dass der Bildverarbeitungsapparat 17 (teilweise oder vollständig) in die Steuerung 14 integriert ist. Gegebenenfalls kann der Bildverarbeitungsapparat und/oder die Steuerung 17 auch den Betrieb der Kamera 7 vorgeben bzw. beeinflussen.

In Fig. 3 wird schematisch die Berechnung der Höhe h beim Einsatz von zwei kugelförmigen Markern 5. Zunächst werden mit der Kamera 7 die kugelförmigen Marker 5 erfasst und ein Abbild erzeugt. Im Abbild werden dann die Mittelpunkte 30 der kugelförmigen Marker 5 ermittelt, beispielsweise durch eine Detektierung von Kreisen im Abbild mit einer Hough-Transformation. Dann werden mathematischen Strahlen von der Kamera 7 zum kugelförmigen Marker 5 mit dem bekannten Mittelpunkt 30 in der intrinsischen Kalibrierung der Kamera 7 gebildet. In Kenntnis des realen Kugeldurchmessers 8 der kugelförmigen Marker 5 wird über intrinsische Parameter auf die Entfernung (c, b) der kugelförmigen Marker 5 geschlossen. Mit dem Strahl und der berechneten Entfernung kann die 3D-Position des kugelförmigen Markers 5 im Kamerakoordinatensystem abgeleitet werden. Die 3D-Position lässt sich mit einer extrinsischen Kalibrierung auf einen Bezugspunkt am Fahrzeug 2 beziehungsweise Traktor beziehen und somit in das Weltkoordinatensystem umrechnen. Über die ermittelten Höhen (h) kann die Differenz dieser Höhen und über den bekannten Abstand (a) der relative Winkel bestimmt werden. Das Detail A in Fig. 3 veranschaulicht diesen geometrischen Zusammenhang.

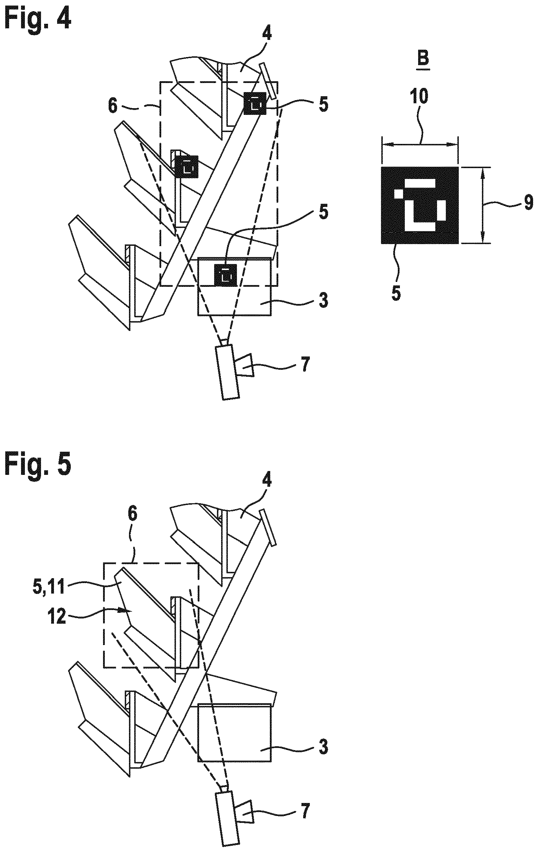

In Fig. 4 ist schematisch gezeigt, wie eine Markierung eines Anbaugerätes 4 mit eckigen Markern 5 erfolgen kann. Die im Detail B von Fig. 4 vergrößerte Darstellung eines eckigen Markers 5 lässt die im Wesentlichen quadratische Rahmenkontur 9 mit einer vordefinierten Größe 10 erkennen, wobei hier ein kontrastreiches (eindeutiges) Muster im Inneren vorgesehen ist. Die mehreren eckigen Marker 5 am Anbaugerät 4 und dem Hubwerk 3 können mit unterschiedlichen Mustern ausgeführt sein, so dass eindeutige IDs ermittelbar sind. Die Kamera 7 ist hier so ausgerichtet, dass diese ein Abbild 6 erzeugen kann, das alle eckigen Marker 5 erfasst.

Bei der Darstellung in Fig. 5 ist kein separater Marker zusätzlich am Anbaugerät 4 oder Hubwerk 3 montiert, sondern das Abbild 6 einer Komponente 11 des Anbaugerätes 4, wie hier beispielhaft eine Pflugschar, und die Kenntnis der realen 3-dimensionalen Form 12 wird als Marker 5 zur Bestimmung der Verkippung herangezogen.

### Bezugszeichenliste

- 1: Neigung
- 2: Fahrzeug
- 3: Hubwerk
- 4: Anbaugerät
- 5: Marker
- 6: Abbild
- 7: Kamera
- 8: Kugeldurchmesser
- 9: Rahmenkontur
- 10: Größe
- 11: Komponente
- 12: 3-dimensionale Form
- 13: Betätigungseinheit
- 14: Steuerung
- 15: Schaltungsanordnung
- 16: Vorrichtung
- 17: Bildverarbeitungsapparat
- 18: Datenspeicher
- 19: Erkennungseinrichtung
- 20: Erfassungseinrichtung
- 21: Bewertungseinrichtung
- 22: Ausgabeeinrichtung
- 23: Boden
- 24: Oberlenker
- 25: Unterlenker
- 26: Unterlenkerzylinder
- 27: Pumpe
- 28: Regelventil
- 29: datenleitende Verbindung
- 30: Mittelpunkt

## Patentansprüche

1. Verfahren zur Bestimmung einer Neigung (1) eines an einem Fahrzeug (2) befindlichen oder mittels eines Hubwerkes (3) kippbaren Anbaugerätes (4), umfassend zumindest die folgenden Schritte:
a) Erfassen mindestens eines Markers (5) an zumindest dem Hubwerk (3) oder dem Anbaugerät (4),
b) Erstellen eines Abbildes (6) des mindestens einen Markers (5) mit einer Kamera (7),
c) Ermitteln zumindest eines Marker-Formparameters oder Marker-Lageparameters aus dem Abbild (6),
d) Bestimmen der Neigung (1) des Anbaugerätes (4) mittels eines Abgleiches des Ergebnisses aus Schritt c) mit zumindest einem vorgebbaren realen Marker-Formparameter oder Marker-Lageparameter des Markers (5).

2. Verfahren nach Patentanspruch 1, wobei mindestens zwei kugelförmige Marker (5) mit einem Kugeldurchmesser (8) vorgesehen sind und für den Abgleich als Marker-Formparameter der Kugeldurchmesser (8) und als Marker-Lageparameter eine Relativlage der zumindest zwei kugelförmigen Marker (5) zueinander berücksichtigt wird.

3. Verfahren nach einem der vorhergehenden Patentansprüche, wobei mindestens ein eckiger Marker (5) mit einer Rahmenkontur (9) vorgegebener Größe (10) vorgesehen ist und für den Abgleich als Marker-Formparameter die Größe (10) der Rahmenkontur (9) und als Marker-Lageparameter eine Rotation der Rahmenkontur (9) berücksichtigt wird.

4. Verfahren nach einem der vorhergehenden Patentansprüche, wobei der mindestens ein Marker (5) eine vorgegebene Komponente (11) des Anbaugerätes (4) mit einer 3-dimenionalen Form (12) ist und für den Abgleich als Marker-Formparameter eine Verzerrung der 3-dimenionale Form (12) der Komponente (11) berücksichtigt wird.

5. Verfahren zum Betrieb eines Fahrzeuges (2) mit zumindest einer hydraulischen Betätigungseinheit (13), einem Hubwerk (3), einer Steuerung (14), einer Kamera (7) und einem kippbaren Anbaugerät (4), wobei ein Verfahren nach einem der vorhergehenden Patentansprüche die Neigung des Anbaugerätes (4) bestimmt und die Neigung auf einen vorgebbaren Sollwert automatisch nachgeregelt wird.

6. Elektronische Schaltungsanordnung (15) zur Neigungsbestimmung oder Neigungsanpassung eines kippbaren Anbaugerätes (4), die in einem Fahrzeug (2) angeordnet ist, eingerichtet zur Durchführung eines Verfahrens nach einem der vorhergehenden Patentansprüche.

7. Vorrichtung (16) an einem Fahrzeug (2) mit zumindest einer hydraulischen Betätigungseinheit (13), einem Hubwerk (3), einer Steuerung (14), einer Kamera (7) und einem kippbaren Anbaugerät (4) sowie einer elektronischen Schaltungsanordnung (15) nach Patentanspruch 6.

8. Bildverarbeitungsapparat (17), zumindest umfassend
- eine Kamera (7),
- einen Datenspeicher (18) für Abbilder (6),
- eine Erkennungseinrichtung (19) für mindestens einen Marker (5) an einem Hubwerk (3) oder einem Anbaugerät (4) an einem Fahrzeug (2) auf einem Abbild (6) der Kamera (7),
- eine Erfassungseinrichtung (20) für zumindest einen Marker-Formparameter oder einen Marker-Lageparameter des Markers aus dem Abbild (6) der Kamera (7),
- eine Bewertungseinrichtung (21) für zumindest einen Marker-Formparameter oder einen Marker-Lageparameter des Markers (5) aus dem Abbild (6) der Kamera (7) in Bezug auf einen realen Marker-Formparameter oder einen Marker-Lageparameter des Markers (5) zur Bereitstellung einer Lageinformation,
- eine Ausgabeeinrichtung (22) für die Lageinformation.
